Europäisches Patentamt

**European Patent Office**

**Office européen des brevets**

(11) Numéro de publication: **0 283 382**
**A1**

# (12) DEMANDE DE BREVET EUROPEEN

(21) Numéro de dépôt: 88400550.5

(22) Date de dépôt: 09.03.88

(51) Int. Cl.⁴: **G 05 B 19/04**

(30) Priorité: 11.03.87 FR 8703336

(43) Date de publication de la demande:
21.09.88 Bulletin 88/38

(84) Etats contractants désignés:
**BE DE ES GB IT LU NL**

(71) Demandeur: **SPIE-TRINDEL Société Anonyme**
**Tour Anjou 33 Quai de Dion-Bouton**
**F-92814 Puteaux (FR)**

(72) Inventeur: **Corbier,Franck**
**1 rue de la Champagnerie**
**F-57270 Uckange (FR)**

**Edlinger,Alain**
**1 rue de la Champagnerie**
**F-57270 Uckange (FR)**

**Morel, Gérard**
**Lab. d'Autom. & de Commande Num. Fac. des Sciences**
**B.P. 239, F-54506 Vandoeuvre les Nancy (FR)**

**Roesch, Michel**
**Lab. d'Autom. & de Commande Num. Fac. des Sciences**
**B.P. 238, F-54506 Vandoeuvre les Nancy (FR)**

**Roesch, Pierre**
**1 rue de la Champagnerie**
**F-57270 Uckange (FR)**

(74) Mandataire: **Bouju, André**
**Cabinet Bouju 38 avenue de la Grande Armée**
**F-75017 Paris (FR)**

(54) Procédé pour valider le fonctionnement d'un automatisme et dispositif pour sa mise en oeuvre.

(57) On valide le fonctionnement d'un automatisme de contrôle-commande (7) à logique câblés ou programmée qui est destiné à l'automatisation d'un processus industriel ou analogue.

On relie l'automatisme de contrôle-commande (7) à un automatisme de simulation (1). A partir d'un microcalculateur (2) ou analogue relié à cet automatisme de simulation, on programme celui-ci pour lui permettre de simuler le fonctionnement des actionneurs et capteurs de l'installation pour réaliser le processus industriel.

A partir du microcalculateur (2), on peut également simuler des défauts de fonctionnement de l'installation.

Application aux tests de bon fonctionnement des automates programmables.

FIG.1

EP 0 283 382 A1

## Description

"Procédé pour valider le fonctionnement d'un automatisme et dispositif pour sa mise en oeuvre"

La présente invention concerne un procédé pour valider le fonctionnement d'un automatisme de contrôle-commande, notamment un automatisme à logique câblée du type armoire de contrôle-commande à relais ou à logique programmée du type contrôleur programmable industriel. Cet automatisme est destiné à l'automatisation d'un processus industriel ou analogue, l'installation pour réaliser ce processus industriel comprenant des organes opératifs tels que des actionneurs et des capteurs.

L'invention vise également un dispositif pour la mise en oeuvre du procédé précité.

La validation du fonctionnement ou encore de la programmation d'un automatisme de contrôle-commande destiné à l'automatisation d'un processus industriel est une étape essentielle de la réalisation de l'installation pour exécuter ce processus industriel. Avant la première mise en service sur le site qui intervient lors de la recette de l'installation, l'installateur doit certifier que l'automatisme précité remplit effectivement l'ensemble des fonctions spécifiées dans le cahier des charges de son client et répercutées dans l'analyse fonctionnelle acceptée par celui-ci.

Cette validation est généralement réalisée dans une plate-forme d'essais et vis à livrer un ensemble d'équipements dit "propre", c'est-à-dire limitant au strict minimum les travaux de mise en service sur le site.

Un procédé connu de validation consiste à relier un pupître de simulation aux interfaces d'entrée et de sortie de l'automatisme de contrôle-commande à valider. Ce pupître de simulation communément appelé "boite à boutons" présente sur sa face avant un certain nombre de voyants lumineux et d'interrupteurs ou boutons-poussoirs. Les voyants simulent la commande des actionneurs de l'installation tels que les moteurs, les vérins ou les pompes tandis que les interrupteurs, actionnés manuellement par un opérateur, simulent les capteurs d'état ou de position de cette installation. Ce procédé convient dans des cas simples mais est de mise en oeuvre particulièrement délicate pour les applications courantes dont la complexité est généralement élevée. On doit en effet dans ces applications traiter des interactions nombreuses entre actionneurs, de sorte que la mise en oeuvre du procédé de validation exige la mobilisation d'un personnel nombreux et compétent. Des risques d'erreurs sont en outre possibles.

Dans certains cas particuliers, l'opérateur dispose sur la plate-forme d'essais d'actionneurs sensiblement identiques à ceux mis en oeuvre sur le site. Certaines tâches peuvent être alors exécutées plus rapidement mais la validation est rendue plus onéreuse et moins aisée du fait des équipements importants et encombrants auxquels on fait appel.

Un autre procédé de validation connu fait intervenir un programme informatique qui est une réplique logicielle exacte de l'installation automatisée par l'automatisme à valider. Ce procédé est a priori intéressant car il procure une grande finesse de simulation mais sa mise en oeuvre nécessite des moyens énormes en ce qui concerne les matériels, les temps d'étude et le personnel nécessaire. En effet, on constate en pratique que si l'on ne veut pas que se produise à deux reprises la même erreur d'appréciation du cahier des charges de l'installation ou de son analyse fonctionnelle, il est préférable que les programmes de l'automatisme de contrôle-commande et de simulation respectivement soient étudiés et écrits par deux équipes distinctes de techniciens.

Un but de la présente invention est de remédier aux inconvénients des procédés connus en proposant un procédé de validation et un dispositif pour la mise en oeuvre de ce procédé qui permettent de faciliter et d'optimiser l'élaboration des essais de bon fonctionnement destinés à valider un automatisme de contrôle-commande avant la mise en service définitive de l'installation dont il assure l'automatisation.

Un autre but de l'invention est de simplifier la mise en oeuvre du procédé suivant l'invention en donnant la possibilité à opérateur de configurer simplement et fiablement l'installation en question et de perfectionner ce procédé en autorisant la simulation de défauts de fonctionnement des capteurs ou des actionneurs de cette installation afin de permettre simultanément de tester le logiciel de programmation de l'automatisme à valider.

Suivant l'invention, le procédé de validation du type mentionné plus haut est caractérisé en ce qu'on relie l'automatisme de contrôle-commande à un automatisme de simulation qui est de préférence un contrôleur programmable industriel que l'on programme pour lui permettre de simuler le fonctionnement des organes opératifs de l'installation pour réaliser ledit processus industriel.

Suivant le procédé conforme à l'invention, le contrôleur programmable industriel se comporte comme un processeur en temps réel pour la simulation du fonctionnement normal des actionneurs et des capteurs qui leur sont associés. Ce contrôleur contient en mémoire un programme complet de simulation qui représente exactement l'installation pilotée par l'automatisme de contrôle-commande.

L'utilisation d'un automatisme de simulation programmable procure une qualité de contrôle élevée car il permet de tester le programme de l'automatisme de contrôle-commande en vraie grandeur. Chaque tâche de ce programme peut être vérifiée en temps réel et des événements perturbateurs peuvent être pris en compte pour le contrôle des sécurités. De cette façon, il est possible de réduire considérablement la durée des essais et la mise en service de l'installation.

On peut en outre, en temps réel, sans perte de temps et sans risque réaliser la mise au point hors site du programme, c'est-à-dire par exemple en usine. Après mise au point du programme, le personnel d'exploitation peut être formé hors site à l'utilisation de l'installation simulée sur le contrôleur programmable sans risque pour cette installation étant donné que les erreurs de manipulation dans ce cas ne sont pas répercutées sur les équipements qui la composent.

Selon une version avantageuse de l'invention, on programme l'automatisme de simulation à partir de moyens informatiques du type ordinateur ou analogue que l'on a préalablement reliés à l'automatisme de simulation.

Les moyens informatiques précités permettent de configurer l'installation, c'est-à-dire de décrire les paramètres de fonctionnement des différents éléments opératifs qui la composent, de construire le programme de simulation, de télécharger ce programme de simulation dans la mémoire de l'automatisme de simulation et de conduire la simulation en autorisant la visualisation des états de chaque actionneur et la génération de défauts.

De préférence, à partir des moyens informatiques précités, on charge dans la mémoire de l'automatisme de simulation, le programme de simulation des actionneurs de l'installation sous forme de modules de programme élémentaires contenant chacun des instructions indicatives de la nature de l'actionneur correspondant et paramétrables suivant la fonction de cet actionneur dans l'installation, ainsi que les paramètres de fonctionnement de chaque actionneur.

Suivant l'invention, la démarche consiste à modéliser de manière définitive la commande et le contrôle de chaque actionneur afin de créer une bibliothèque logicielle réutilisable pour différentes réalisations. Cette démarche est possible car elle ne concerne que la partie opérative du logiciel de programmation de l'automatisme de contrôle-commande, c'est-à-dire la partie concernant essentiellement les tâches de contrôle et de commande des actionneurs et se distinguant de la partie dite fonctionnelle, spécifique à chaque réalisation, qui corresopnd au processus industriel proprement dit.

Suivant l'invention, le dispositif pour la mise en oeuvre du procédé précité est caractérisé en ce qu'il comprend un automatisme de simulation que est de préférence un contrôleur programmable industriel ou "automate programmable", relié d'une part à l'automatisme de contrôle-commande du processus industriel et d'autre part à des moyens informatiques du type ordinateur, comprenant des moyens de visualisation et formant clavier et reliés à une imprimante de consignation, ces moyens informatiques étant en outre programmés pour permettre la configuration de l'installation, la génération du programme de simulation, le téléchargement de ce programme en mémoire de l'automate de simulation et la conduite de la simulation.

Un tel dispositif est ainsi particulièrement bien adapté à la mise en oeuvre du procédé conforme à l'invention. L'imprimante de consignation permet notamment de garder une trace horodatée des défauts simulés pouvant attester des essais réalisés sur le programme de contrôle-commande.

D'autres caractéristiques et avantages de l'invention ressortiront encore de la description qui va suivre.

Aux dessins annexés donnés à titre d'exemples non limitatifs :

  - la figure 1 est une vue schématique en perspective du dispositif conforme à l'invention,
  - la figure 2 illustre les liaisons entre l'automatisme de contrôle-commande et l'installation automatisée par celui-ci,
  - la figure 3 est une table décrivant une application particulière et utilisée lors de la synchronisation des appels des sous-programmes modulaires du programme de simulation,
  - la figure 4 donne la composition générale d'un sous-programme ou module de simulation,
  - les figures 5 et 6 illustrent la méthodologie de constitution d'éléments de partie opérative,
  - les figures 7 à 13 représentent les menus utilisés lors de la configuration de l'installation à partir des moyens informatiques suivant l'invention, et
  - les figures 14 à 16 représentent les menus utilisés lors de la conduite de la simulation à partir des moyens informatiques précités.

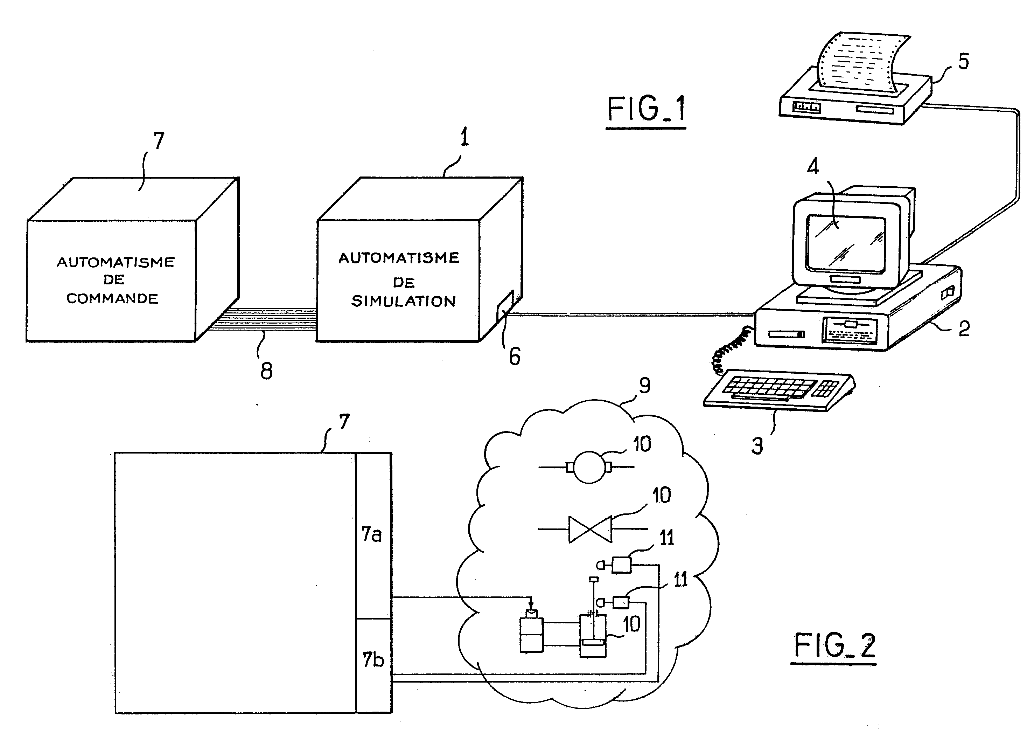

A la figure 1, on voit que le dispositif pour la mise en oeuvre du procédé conforme à l'invention comprend essentiellement un automatisme de simulation 1 relié à des moyens informatiques 2 tels qu'un microcalculateur de type IBM PC AT3 et compatible comprenant un clavier 3 et un écran de visualisation 4 et relié à une imprimante de consignation 5.

L'automatisme de simulation 1 est dans l'exemple un contrôleur programmable industriel, communément appelé automate programmable et connu de l'homme de l'art tel que le PB 400 fabriqué par APRIL (Merlin Gérin).

L'automate de simulation 1 est relié au microcalculateur 2 par l'intermédiaire de sa prise console 6, c'est-à-dire la prise qui est utilisée pour la programmation classique de cet automate à partir d'une console de programmation. Le raccordement du microcalculateur 2 à la prise console 6 de l'automate 1 présente le double avantage de permettre le téléchargement du programme de simulation en mémoire de l'automate 1, à partir du microcalculateur 2, de manière classique et d'autoriser l'accès direct à n'importe quelle adresse mémoire de l'automate 1.

Pour la mise en oeuvre du procédé de validation selon l'invention qu'on décrira en détail plus loin, on relie l'automate de simulation 1 à l'automatisme de contrôle-commande 7 qui est par exemple un automate programmable.

L'automate 7 est programmé pour assurer par exemple l'automatisation d'un processus industriel, l'installation 9 pour réaliser ce processus industriel comprenant (voir figure 2) un certain nombre d'actionneurs 10 dits éléments de partie opérative (E.P.O.) ou éléments opératifs, chacun de ces actionneurs étant associé à un ou plusieurs capteurs 11.

La connexion des deux automates 1, 7 se fait au moyen d'une nappe 8 dite "16 fils" en reliant respectivement chaque sortie de commande 7a de l'automate 7, délivrant un "ordre opératif", à une entrée de l'automate 1 et chaque sortie de l'automate 1, délivrant un "compte rendu opératif", à une entrée 7b de l'automate 7. En affectant les entrées-sorties de l'automate de simulation 1 en prenant en compte l'image "miroir" des entrées-sorties de l'automate 7, on simplifie très sensiblement les opérations de câblage. Cette technique de câblage permet en outre de maintenir inchangées les entrées-sorties de l'automate de contrôle-commande 7 et de les tester telles qu'elles seront raccordées en pratique sur le site. Elle n'oblige pas non plus à modifier la programmation de l'automate 7 à la différence d'une liaison coupleur entre les automate 1 et 7 pour laquelle un programme particulier serait à écrire et qui introduirait également des temps de réponse non négligeables alors que la technique de câblage précitée permet de garantir des temps de réponse identiques à ceux rencontrés sur l'installation réelle.

Conformément à l'invention, l'automate 1 dans lequel on va charger d'une manière que l'on décrira plus loin le programme complet de simulation de l'installation en cause, va jouer, une fois programmé, le rôle de processeur temps réel pour la simulation des actionneurs 10 de l'installation 9 et de leurs capteurs 11. De son côté, le microcalculateur 2 est utilisé pour configurer ou décrire logiciellement l'installation, construire le programme de simulation, télécharger ce programme de simulation dans l'automate de simulation 1 et enfin conduire la simulation en visualisant les états de chaque actionneur et en générant des défauts. L'ensemble de ces opérations est réalisé à partir du clavier 3 et à l'aide de l'écran 2.

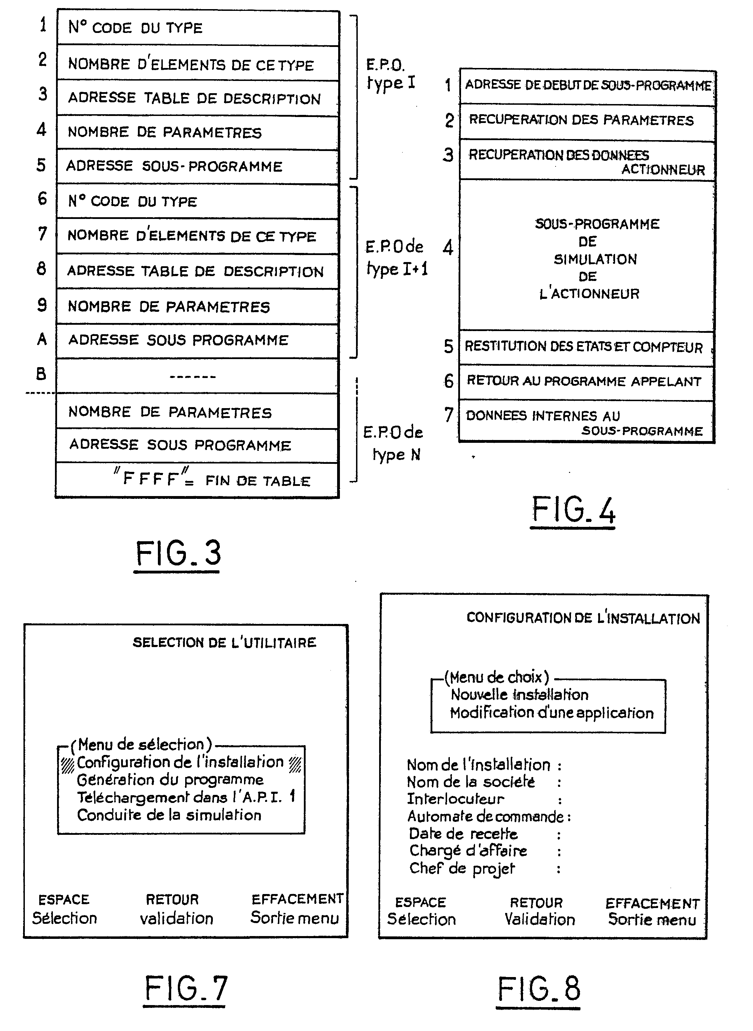

On va maintenant décrire à l'aide des figures 3 à 16, la mise en oeuvre du dispositif conforme à l'invention.

La mise en oeuvre du dispositif décrit s'éffectue à partir de bibliothèques de données disponibles en mémoire du microcalculateur 2, c'est-à-dire :

- une bibliothèque de modèles qui comprend tous les modules représentant les programmes de simulation des actionneurs les plus courants, ces modules se présentent sous la forme de sous-programmes paramètrables que l'on décrira plus loin,

- une bibliothèque de grilles de configuration permettant la saisie des paramètres de fonctionnement de chaque actionneur,

- une bibliothèque de menus pour la conduite de la simulation.

Le programme de simulation à charger dans la mémoire de l'automate 1 comprend une première partie réalisant la synchronisation des appels d'une deuxième partie formée par les sous-programmes ou modules de simulation des éléments de partie opérative, c'est-à-dire les actionneurs, et une troisième partie qui fixent les règles à respecter pour l'application en cours.

Le rôle de la première partie est de séquencer l'appel des sous-programmes de simulation. Cette partie ne dépend pas de l'installation considérée et peut être implantée à demeure dans l'automate 1. A cet effet, le programme scrute une table générale (voir figure 3) dans laquelle est décrite l'installation (types d'actionneurs, nombre d'éléments pour chaque type, adresses de description des éléments, adresses des modules de simulation etc...) et qui est disposée en zone mémoire commune de l'automate 1.

Chaque élément opératif (E.P.O.) ou actionneur est défini par cinq paramètres dont le code (famille et type) et le nombre d'éléments de ce type. Le programme teste le code de cinq en cinq. Tant qu'il ne trouve pas la valeur 'FFFF" de fin de table, un appel successif est effectué au sous-programme représentatif des N actionneurs du type en cours. L'appel est réalisé grâce à l'adresse des sous-programmes mémorisée dans la table. Les trois paramètres suivants sont calculés et passés lors de l'appel:

- le numéro de code (famille et type),
- le numéro de l'élément à traiter pour le type I courant,
- l'adresse d'implantation de la table de paramètres de cet élément.

Les sous-programmes de simulation proprement dits peuvent être implantés à n'importe quelle adresse programme de l'automate 1 pourvu qu'ils ne chevauchent pas deux pages consécutives de sa mémoire programme. Chaque sous-programme permet la simulation du fonctionnement de tous les actionneurs d'un même type. La discrimination entre deux actionneurs de même type est faite par l'adresse qui est calculée lors de l'appel du sous-programme considéré. La figure 4 donne la composition générale d'un sous-programme de simulation.

Tout sous-programme peut être implanté en mémoire progamme de l'automate 1 à une adresse définie soit par un opérateur (en mode manuel), soit par le microcalculateur 2 (en mode automatique). Un mot binaire contenant l'adresse de début de sous-programme est construit à l'assemblage du programme de simulation tandis que le numéro de la page mémoire où est stocké le sous-programme considéré est calculé automatiquement.

La récupération des paramètres consiste, lors de l'appel du sous-programme considéré, à mémoriser à une adresse prédéterminée l'adresse de retour au programme appelant, c'est-à-dire l'adresse suivant le saut vers le sous-programme. Les trois paramètres précités sont alors stockés à partir de cette adresse pour être mis à la disposition du module de simulation considéré.

Pour la récupération des données de l'actionneur, le sous-programme peut travailler soit directement à partir de la table de paramètres représentée sur la figure 3, dont l'adresse de départ a été calculée lors de l'appel de celui-ci, soit sur une table image interne qu'on remplit au début du sous-programme. On retiendra de préférence cette dernière solution.

On va maintenant décrire la méthodologie de constitution des modules de simulation.

Le processus à simuler est un ensemble d'éléments simples qui, sous les ordres de l'automate de contrôle-commande 7, réalisent des fonctions plus ou moins simples selon l'application. L'analyse de la simulation ne doit pas se faire globalement mais doit être menée de manière structurée sur la base de l'analyse fonctionnelle établie pour la programmation de l'automate 7. Si du point de vue du contrôle-commande, l'installation 9 pour réaliser le processus précité apparaît comme un enchaînement de fonctions, la simulation va interpréter le processus physiquement par le biais des éléments qui remplissent lesdites fonctions. A cet effet, il s'agit d'utiliser au niveau le plus bas des modules opératifs logiciels standardisés représentant fidèlement le fonctionnement de l'élément physique qu'ils remplacent. Des interactions entre modules peuvent intervenir dans les cas où il y a transfert de produit (cas des bandes transporteuses) et dans ceux où plusieurs actionneurs sont liés par des sécurités en logique câblée. Dans la plupart des cas, les modules sont indépendants les uns des autres.

Le module de simulation doit réagir fidèlement vis-à-vis des ordres "opératifs" émanant de l'automate de commande 7.

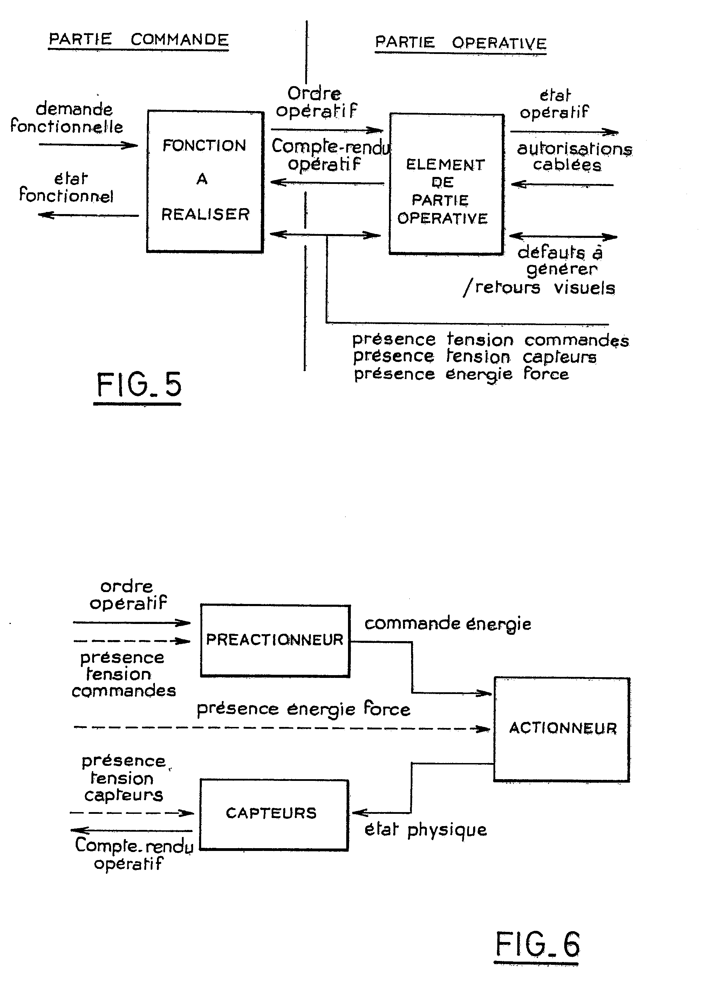

A la figure 5, on voit qu'un élément de partie opérative peut interagir avec l'opérateur de simulation, le module logiciel de contrôle-commande correspondant, un niveau opératif supérieur ou d'autres éléments de partie opérative.

L'opérateur n'intervient que pour générer des défauts. Ce n'est pas lui qui simule le fonctionnement normal des actionneurs mais il supervise ce fonctionnement et peut à tout moment décider d'en modifier le comportement. A cet effet, il doit être en mesure de visualiser les états de chaque actionneur, les étants de leurs capteurs et l'état des sources d'énergie associées. A partir de ces données et par le biais d'un mot logique de contrôle, il pourra convenir des défauts et des modifications de commande à réaliser tels que défaut de commande de préactionneur, le préactionneur étant un élément associé à l'actionneur pour récupérer l'ordre opératif et l'associer à une commande de puissance, des blocages mécaniques ou un défaut de capteur de fin de course.

Chaque module de simulation du programme de l'automate 1 est par ailleurs directement associé, par le biais des liaisons entre entrées et sorties des automates 1 et 7 à un module élémentaire de contrôle-commande du programme de l'automate 7 dont il reçoit des ordres opératifs qu'il doit satisfaire et vers lequel il adresse les comptes rendus opératifs de fin de travail. Comme on l'a vu, la liaison entre ces deux modules est du type fil à fil, une voie logique de sortie de l'automate 1 étant reliée à une voie logique d'entrée de l'automate 7 et inversement.

Les informations échangées entre deux niveaux opératifs sont essentiellement du type "flux de matière". Un niveau opératif supérieur simule en général un déplacement de matière entre deux bandes transporteuses ou analogues. On simulera ainsi des capteurs de passage tels que des cellules de détection. En ce qui concerne les interactions entre modules, on doit prendre en compte :

- qu'un module de simulation, à l'image d'un module de commande, a besoin de connaître l'état des ressources énergétiques des autres modules tels que compresseurs pneumatiques ou hydrauliques, blocs d'alimentation en tension etc.., ces éléments intervenant nécessairement sur l'évolution de l'actionneur considéré ;

- que certaines installations présentent des sécurités câblées en armoire de commande qu'il faut simuler par des impossibilités d'évolution de l'élément opératif considéré provenant d'autres éléments opératifs. Ces impossibilités d'évolution seront représentées sous la forme d'autorisations internes au simulateur.

Un élément opératif type est schématisé à la figure 6. Il comprend essentiellement un préactionneur défini plus haut, un actionneur qui en fonction de l'énergie qui lui est fournie se déplace d'un état stable vers un autre et des capteurs qui valident pour la commande la position de l'actionneur.

Pour simuler un élément opératif, il faut d'abord adapter la technologie du préactionneur. Il faut à cet effet simuler l'appareillage électrique ou mécanique fournissant l'énergie d'entraînement à l'actionneur. Les informations d'entrée du module de programmation correspondant sont des ordres filtrés dits "ordres modèles" et adaptés par le fonctionnement du préactionneur en ordres dits "adaptés". L'information "présence énergie commande" intervient à ce niveau pour inhiber les commandes opératives. Il faut ensuite adapter la technologie de l'actionneur qui reprend les ordres adaptés par le préactionneur pour évoluer entre différents états stables, l'information "présence énergie force" intervenant pour figer ou inhiber l'évolution de l'actionneur. Il faut enfin adapter la technologie des capteurs en déterminant l'état de ces capteurs à partir de l'état des actionneurs correspondants. A cet effet, il faut prendre en compte l'information "présence tension capteurs" et la logique d'acquisition des informations.

Il faut également programmer les défauts sur la commande en réalisant un filtrage des ordres opératifs réels. Il s'agit à cet effet de tester si un défaut est demandé sur la commande opérative. Si ce n'est pas le cas, une affectation directe est réalisée entre l'ordre réel et l'rodre adapté précité. En cas de simulation de défaut, l'ordre "adapté" prend la valeur du défaut simulé. Pour prendre en compte les défauts sur les capteurs, il faut filtrer les informations "état capteur adapté" de manière qu'en cas de simulation de défaut, la sortie correspondante de l'automate de simulation 1 prenne la valeur du défaut associé. En fonctionnement normal, une affectation directe est réalisée.

Après scrutation de chaque sous-programme de simulation, il faut sauvegarder les données qui ont évolué dans la table des paramètres associée à l'élément opératif considéré. Le retour au programme appelant se fait par un saut à l'adresse particulière mentionnée plus haut.

La zone de données internes au sous-programme comprend deux zones :

- une zone tampon qui contient toutes les informations à récupérer dans la table de paramètres du module considéré, les accès du sous-programme à cette table étant directs et,

- une zone de données utile au module de simulation qui contient l'adresse de retour au programme appelant, l'adresse de début de la table de paramètres, un mot interne représentant l'adresse de travail lors de la récupération des données et le nombre de paramètres à récupérer dans la table.

La troisième partie est représentative des règles à respecter dans la conduite de l'installation. Son contenu est donc lié à l'application considérée et ne peut pas être standardisé. Au niveau de l'automate de simulation 1, les soius-programmes de simulation sont considérés comme des éléments passifs qui réagissent, comme les éléments physiques qu'ils simulent, aux ordres opératifs de l'automate de contrôle-commande 7. Dans cette partie, on programme les conditions dites de "non fonctionnement" de l'installation qui sont généralement décrites dans le cahier des charges de l'automate 7. La prise en compte de ces conditions dans la programmation de l'automate de simulation 1 permet ainsi la validation complète du programme de l'automate 7.

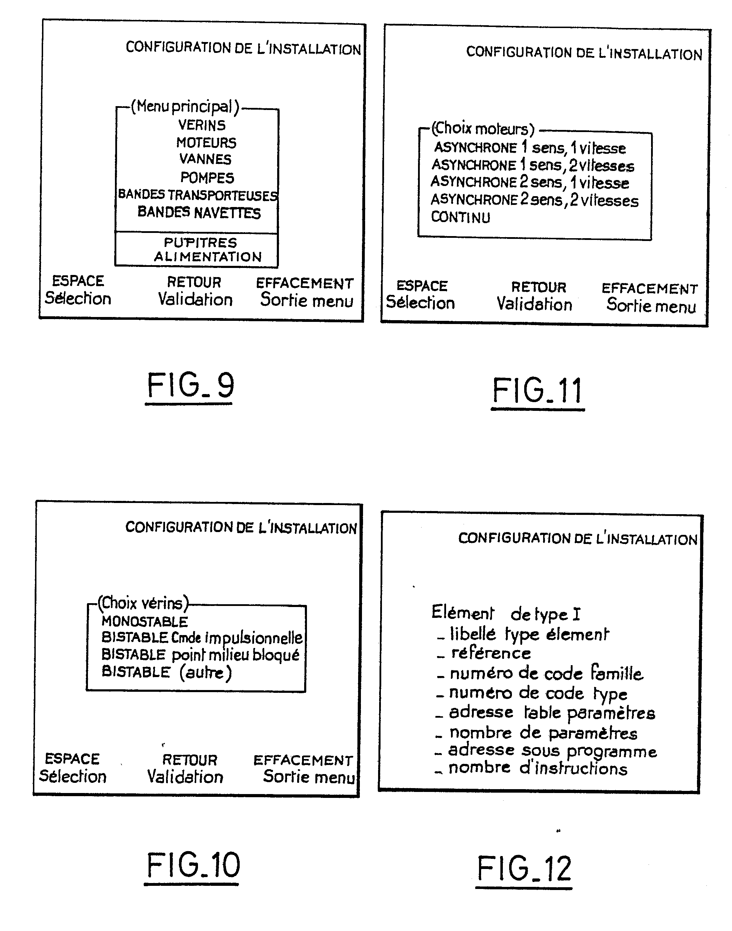

On va maintenant décrire la méthodologie de configuration de l'installation à partir du microcalculateur 2. On dispose à cet effet au niveau de celui-ci d'utilitaires (voir figure 7) permettant de configurer l'installation, de construire le programme de simulation, de télécharger ce programme de simulation dans l'automate 1 et enfin de conduire la simulation, seules ces deux dernières tâches nécessitant que le microcalculateur 2 soit relié à l'automate 1 et que ce dernier soit relié à l'automate 7.

Un opérateur peut donc choisir la tâche à réaliser à partir du menu de la figure 7 affiché sur l'écran 4 du microcalculateur 2.

Lorsque la phase de configuration d'une installation est choisie, il faut alors définir l'opération à réaliser, c'est-à-dire soit la description d'un nouveau processus, soit la reprise d'une ancienne configuration à compléter. A partir du menu de la figure B, on peut sélectionner la fonction "nouvelle installation" ce qui va lancer une tâche de saisie de paramètres de cette installation tandis que la fonction "modification d'une application" conduit à la saisie de paramètres de cette application qui ont été préalablement enregistrés et un passage en mode de fonctionnement "modification" du calculateur 2.

Dans le cas d'une nouvelle configuration, on insèrera dans le lecteur de disquettes du calculateur 2 une disquette vierge qui sera formatée pour recevoir les paramètres de l'applications stockés dans un premier fichier déterminé.

Le programme de saisie permettant la configuration de l'installation doit permettre la description exacte de tous les éléments opératifs 10 constituant l'installation 9 pour automatiser le processus industriel en cause et dont le contrôle-commande est normalement assuré par l'automate 7. Il faut en particulier pourvoir saisir les caractéristiques techniques desdits éléments tels que :

- présence de capteurs de position,
- type de distributeur,
- position-repos,
- pression d'entraînement,
- durée de transitoire de sortie, et les données d'implantation, c'est-à-dire,
- adresse d'implantation de chaque sous-programme ou module de simulation,
- adresse des entrées-sorties correspondantes.

On notera que ces dernières données peuvent être définies soit manuellement par l'opérateur soit automatiquement par le microcalculateur 2.

La "déclaration" des différents modules de simulation se fait à partir d'une série de menus interactifs clairs et précis. Le premier niveau de configuration consiste à choisir la famille de l'élément opératif considéré (voir figure 9). Le choix d'une famille particulière conduit à un deuxième niveau de hiérarchie, c'est-à-dire au choix d'un sous-type d'élément opératif dans la famille considérée. Ce sous-type est défini en fonction de l'actionneur correspondant et également en fonction du préactionneur qui lui est associé, c'est-à-dire par exemple un distributeur pour un vérin ou une commande électrique pour un moteur. Les figures 10 et 11 donnent une liste des actionneurs (moteurs et vérins) les plus courants. Cette liste n'est pas exhaustive et peut être étendue facilement par une reconfiguration logicielle des menus.

Après qu'une famille et un sous-type ont été sélectionnés, on doit définir (figure 12) en mode manuel :

- l'adresse d'implantation de la table de paramètres du premier élément du sous-type en cours de configuration,
- l'adresse d'implantation du sous-programme de simulation dudit élément.

A cet instant peut débuter la description des N éléments de chaque type I composant l'installation. La modifiction d'un paramètre et l'ajout ou la suppression d'un élément sont toujours possibles.

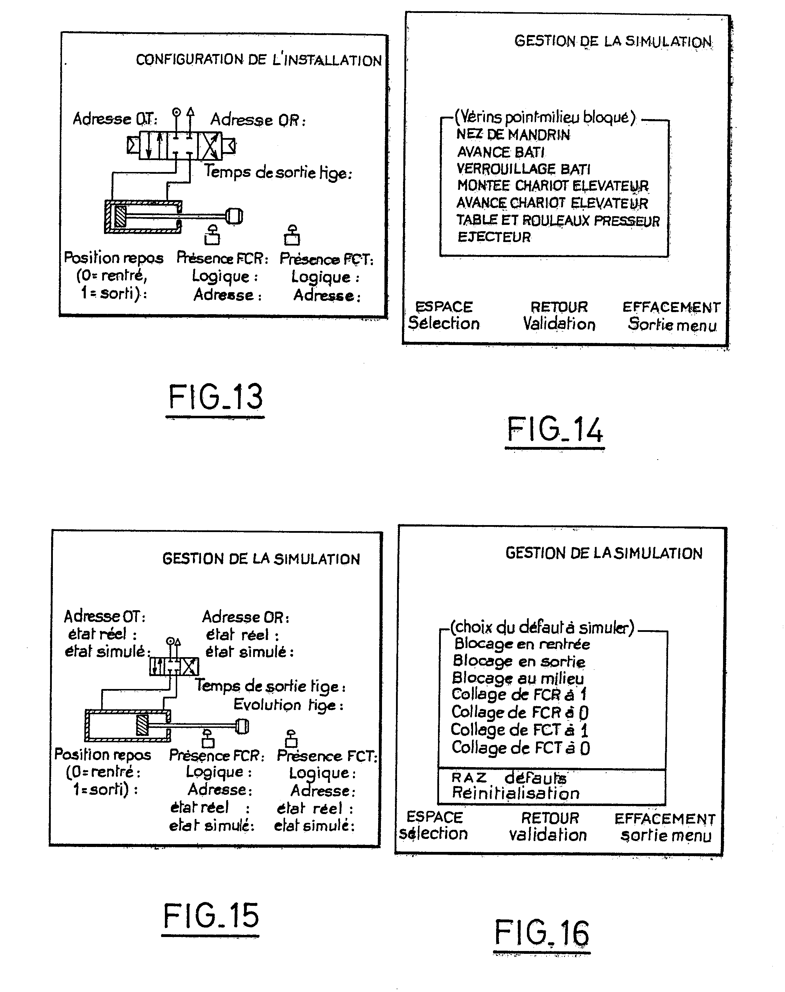

On doit à cet effet répondre à des questions caractérisant précisément l'actionneur choisi. La figure 13 donne l'exemple d'un questionnaire permettant de définir les paramètres d'un vérin bistable à point milieu bloqué. A la figure 13, les sigles utilisés ont la signification suivante :

OT : ordre travail
OR : ordre repos
FCR : fin de course repos
FCT : fin de course travail

A un vérin peut correspondre un ou plusieurs capteurs ou n'en correspondre aucun. L'opérateur doit définir la présence de capteurs et pour chacun, la logique associée à l'information transmise par celui-ci vers la partie commande. En mode manuel, il aura à définir ensuite:

- l'adresse d'implantation du capteur de travail,
- l'adresse d'implantation du capteur de repos,
- l'adresse d'implantation de l'ordre de travail,
- l'adresse d'implantation de l'ordre de repos.
- l'adresse d'implantation de l'information "présence énergie d'entraînement",
- l'adresse d'implantation de l'information "présence tension capteur",
- l'adresse d'implantation de l'information "présence tension commande".

Il faut également indiquer la position de repos de l'actionneur. Par exemple, pour un vérin, il s'agit de préciser si celle-ci correspond à la position d'extension de sa tige ou à la position rétractée de celle-ci tandis qu'en donnant le temps de sortie de cette tige, on précise la durée du transitoire pour passer de l'état stable repos à l'état stable travail.

On crée ainsi une base de données qui contient les caractéristiques de tous les éléments dont le fonctionnement est à simuler. Cette base de données est organisée suivant une double série de fichiers, chaque type d'élément étant caractérisé par un premier fichier de renseignements généraux comprenant les champs suivants :

- Champ 1 : le libellé du nom du type d'élément,
- Champ 2 : la référence de ce type,
- Champ 3 : le code (famille et type),
- Champ 4 : le nombre d'E.P.O. de ce type,
- Champ 5 : l'adresse de début de la table de paramètres du premier E.P.O. de ce type,
- Champ 6 : le nombre de paramètres caractéristiques,
- Champ 7 : l'adresse du sous-programme associé,
- Champ 8 : le nombre d'instructions du sous-programme,

et par un second fichier descriptif comprenant, par exemple pour un vérin bistable, les champs suivants :

- Champ 1 : libellé de la fonction supportée sur l'installation,
- Champ 2 : numéro de la référence mécanique ou électrique de l'actionneur,
- Champ 3 : capteur de travail (1 = présence, 0 = absence),
- Champ 3a : logique capteur (1 = négative, 0 = positive,
- Champ 3b : adresse sur la carte de sortie de l'automate 7,
- Champ 4 : capteur repos (1 = présence, 0 = absence),
- Champ 4a : logique capteur (1 = négative, 0 = positive),
- Champ 4b : adresse sur la carte de sortie de l'automate 7,
- Champ 5 : adresse de l'ordre de travail sur la carte d'entrée de l'automate 7,
- Champ 5a : logique de l'ordre (1 = négatif, 0 = positif),
- Champ 6 : adresse de l'ordre de repos sur la carte d'entrée de l'automate 7,
- Champ 7 : état repos (1 = sortie, 0 = rentrée),
- Champ 8 : durée du transitoire de sortie,
- Champ 9 : durée du transitoire de rentrée,
- Champ 10 : adresse présence énergie force,
- Champ 11 : adresse présence tension capteurs,
- Champ 12 : adresse présence tension commandes.

Lorsque tous les actionneurs ont été décrits, l'opérateur peut demander la génération du programme de simulation par le calculateur 2. En mode manuel, le logiciel de génération des tables de paramètres des éléments opératifs est immédiatement lancé puisque toutes les adresses ont été saisies et testées. En mode automatique, il faut activer une tâche d'affectation des différentes adresses d'implantation. Cette affectation est réalisée de manière à optimiser l'occupation des emplacements mémoire de l'automate de simulation 1. Il faut essentiellement s'assurer qu'une table de paramètres ou qu'un sous-programme de simulation ne chevauche pas deux pages mémoire consécutives de l'automate 1. Le programme de simulation est alors généré en associant les sous-programmes de simultion aux tables de paramètres précédemment décrites.

Le microcalculateur 2 est par ailleurs programmé pour assurer le téléchargement automatique du programme de simulation dans l'automate de simulation 1 lorsque celui-ci est à l'arrêt et pour permettre la conduite de la simulation.

Grâce à une programmation appropriée du calculateur 2, un opérateur peut suivre à partir de l'écran 4 de celui-ci, l'évolution des différents éléments opératifs. L'opérateur choisit à cet effet une famille d'éléments et un type d'élément dans cette famille. Par l'intermédiaire du logiciel de conduite de simulation, le calculateur 2 ouvre la base de données associée, recherche les noms de tous les éléments concernés et les propose en affichant le menu de la figure 14 qui concerne un vérin bistable à point milieu bloqué.

Le choix d'un actionneur particulier conduit le calculateur 2 à rechercher dans cette base de données les paramètres associés à l'élément considéré et à les afficher comme indiqué à la figure 15.

L'opérateur dispose alors de toutes les informations relatives à la configuration, c'est-à-dire en particulier :

- les adresses d'implantation des ordres opératifs et celles des comptes rendus d'exécution,
- la logique des capteurs ainsi que leur présence,
- le temps de sortie de la tige du vérin,
- la position repos de l'actionneur, et celles relatives à la simulation, c'est-à-dire :
- les états réels de chaque entrée-sortie,
- les états simulés,
- la valeur du compteur d'évolution associé à l'élément considéré,
- le défaut en cours.

Lorsque le fonctionnement normal a été testé, un opérateur peut générer aléatoirement des défauts sur un élément opératif. Le but de cette simulation de défauts est de vérifier que l'automate de contrôle-commande détecte effectivement les défauts pouvant intervenir sur l'installation et qu'il réagit correctement en stoppant la commande en cours et en émettant l'alarme appropriée.

L'opérateur dispose à cet effet d'un dernier menu (voir figure 16) proposant, pour chaque type d'actionneur, les différents défauts qu'il est possible de générer. La figure 15 reprend l'exemple du vérin précité. Après que l'opérateur a sélectionné le défaut à simuler, le programme de conduite de calculateur 2 calcule la position du bit de défaut à positionner dans un mot binaire de contrôle affecté au module de simulation correspondant de l'automate 1 puis construit le message nécessaire à l'automate 1 pour effectuer ce positionnement.

Le procédé et le dispositif conformes à l'invention qui permettent de simuler efficacement le comportement de la partie opérative d'une installation afin de tester le bon fonctionnement de l'automatisme destiné au contrôle/commande de ladite installation, pourraient être également mis en oeuvre pour réaliser la formation du personnel à l'utilisation d'un nouvel automatisme de commande ou pour tester

## Revendications

1. Procédé pour valider le fonctionnement d'un automatisme de contrôle-commande (7), notamment un automatisme à logique câblée du type armoire de contrôle-commande à relais ou à logique programmée du type contrôleur programmable industriel, cet automatisme (7) étant destiné à l'automatisation d'un processus industriel ou analogue, l'installation (9) pour réaliser ce processus industriel comprenant des éléments opératifs tels que des actionneurs (10) associés à des capteurs (11), caractérisé en ce qu'on relie l'automatisme de contrôle-commande (7) à un automatisme de simulation (1) que l'on programme pour lui permettre de simuler le fonctionnement des éléments opératifs (10) de l'installation pour réaliser le processus industriel.

2. Procédé conforme à la revendication 1, caractérisé en ce qu'on programme l'automatisme de simulation (1) à partir de moyens informatiques (2, 3, 4) du type ordinateur ou analogue que l'on a préalablement reliés à l'automatisme de simulation (1).

3. Procédé conforme à la revendication 2, caractérisé en ce qu'à partir des moyens informatiques (2, 3, 4), on charge en mémoire de l'automatisme de simulation (1), le programme de simulation des actionneurs (10) de l'installation sous forme de modules de programme élémentaires contenant chacun des instructions indicatives de la nature de l'actionneur correspondant (10) et paramétrables suivant la fonction de cet actionneur dans l'installation (9) ainsi que les paramètres de fonctionnement de chaque actionneur (10).

4. Procédé conforme à la revendication 3, caractérisé en ce qu'on affecte à chaque module élémentaire un mot binaire de contrôle pour piloter ce module depuis les moyens informatiques (2, 3, 4).

5. Procédé conforme à l'une des revendications précédentes, caractérisé en ce qu'on relie l'automatisme de simulation (1) à l'automatisme de contrôle-commande (7) de manière que les ordres opératifs émanant de l'automatisme de contrôle-commande (7) soient pris en compte sélectivement par les modules de simulation d'actionneur et que les comptes rendus opératifs correspondant aux informations fournies par les modules de simulation d'actionneur suivant l'état des capteurs associés (11) soient retransmis vers l'automatisme de contrôle-commande (7).

6. Procédé conforme à l'une des revendications précédentes, caractérisé en ce qu'à partir des moyens informatiques (2, 3, 4), on obtient par visualisation ou analogue des informations relatives à l'état des actionneurs (10) et des capteurs associés (11).

7. Porcédé conforme à l'une des revendications précédentes, caractérisé en ce qu'à partir des moyens informatiques (2, 3, 4) on génère sélectivement des défauts de fonctionnement sur les actionneurs (10).

8. Procédé conforme à la revendication 7, caractérisé en ce qu'on consigne continûment les défauts simulés sur une imprimante (5) reliée aux moyens informatiques (2, 3, 4).

9. Dispositif pour la mise en oeuvre du procédé conform à l'une des revendications précédentes, caractérisé en ce qu'il comprend un automatisme de simulation (1) relié d'une part à l'automatisme de contôle-commande (7) du processus industriel et d'autre part à des moyens informatiques (2, 3, 4) du type ordinateur ou analogue comprenant des moyens de visualisation (4) et des moyens formant clavier (3), ces moyens informatiques étant programmés pour permettre la configuration de l'installation (9), la génération du programme de simulation, le téléchargement de ce programme en mémoire de l'automate de simulation (1) et la conduite de la simulation.

10. Dispositif conforme à la revendication 9, caractérisé en ce que l'automatisme de simulation (1) est un contrôleur programmable industriel ou automate programmable.

11. Dispositif conforme à l'une des revendications 9 ou 10, caractérisé en ce que les moyens informatiques (2, 3, 4) sont reliés à une imprimante de consignation (5).

12. Dispositif conforme à l'une des revendications 10 ou 11, caractérisé en ce que les moyens informatiques (2, 3, 4) sont reliés au contrôleur programmable industriel de simulation (1) par l'intermédiaire de sa prise console.

13. Dispositif conforme à l'une des revendications 9 à 12, caractérisé en ce que les entrées et les sorties de l'automatisme de simulation (1) sont respectivement reliées aux sorties (7a) et entrées (7b) de l'automatisme de contrôle-commande (7) du processus industriel.

FIG_1

7 — AUTOMATISME DE COMMANDE

1 — AUTOMATISME DE SIMULATION

8

6

5

4

2

3

FIG_2

7

7a

7b

9

10

10

11

11

10

0283382

0283382

| | |
|---|---|
| 1 | N° CODE DU TYPE |
| 2 | NOMBRE D'ELEMENTS DE CE TYPE |
| 3 | ADRESSE TABLE DE DESCRIPTION |
| 4 | NOMBRE DE PARAMETRES |
| 5 | ADRESSE SOUS-PROGRAMME |
| 6 | N° CODE DU TYPE |
| 7 | NOMBRE D'ELEMENTS DE CE TYPE |
| 8 | ADRESSE TABLE DE DESCRIPTION |
| 9 | NOMBRE DE PARAMETRES |
| A | ADRESSE SOUS PROGRAMME |
| B | ------ |
| | NOMBRE DE PARAMETRES |
| | ADRESSE SOUS PROGRAMME |
| | "FFFF" = FIN DE TABLE |

E.P.O. type I
E.P.O de type I+1
E.P.O de type N

## FIG.3

| | |
|---|---|
| 1 | ADRESSE DE DEBUT DE SOUS-PROGRAMME |
| 2 | RECUPERATION DES PARAMETRES |
| 3 | RECUPERATION DES DONNEES ACTIONNEUR |
| 4 | SOUS-PROGRAMME DE SIMULATION DE L'ACTIONNEUR |
| 5 | RESTITUTION DES ETATS ET COMPTEUR |
| 6 | RETOUR AU PROGRAMME APPELANT |
| 7 | DONNEES INTERNES AU SOUS-PROGRAMME |

## FIG.4

---

SELECTION DE L'UTILITAIRE

┌(Menu de sélection)─────
▨ Configuration de l'installation ▨
Génération du programme
Téléchargement dans l'A.P.I. 1
Conduite de la simulation

ESPACE  RETOUR  EFFACEMENT
Sélection  validation  Sortie menu

## FIG.7

---

CONFIGURATION DE L'INSTALLATION

┌(Menu de choix)─────
Nouvelle installation
Modification d'une application

Nom de l'installation :
Nom de la société :
Interlocuteur  :
Automate de commande :
Date de recette  :
Chargé d'affaire  :
Chef de projet  :

ESPACE  RETOUR  EFFACEMENT
Sélection  Validation  Sortie menu

## FIG.8

0283382

PARTIE COMMANDE                    PARTIE OPERATIVE

demande
fonctionnelle

état
fonctionnel

**FONCTION A REALISER**

Ordre
opératif

Compte-rendu
opératif

**ELEMENT DE PARTIE OPERATIVE**

état
opératif

autorisations
câblées

défauts à
générer
/retours visuels

présence tension commandes
présence tension capteurs
présence énergie force

## FIG. 5

ordre
opératif

présence
tension
commandes

**PREACTIONNEUR**

commande énergie

présence énergie force

**ACTIONNEUR**

présence
tension
capteurs

**CAPTEURS**

état physique

Compte.rendu
opératif

## FIG. 6

0283382

**FIG_9**

CONFIGURATION DE L'INSTALLATION

(Menu principal)
VERINS
MOTEURS
VANNES
POMPES
BANDES TRANSPORTEUSES
BANDES NAVETTES

PUPITRES
ALIMENTATION

ESPACE          RETOUR          EFFACEMENT
Sélection       Validation       Sortie menu

**FIG_11**

CONFIGURATION DE L'INSTALLATION

(Choix moteurs)
ASYNCHRONE 1 sens, 1 vitesse
ASYNCHRONE 1 sens, 2 vitesses
ASYNCHRONE 2 sens, 1 vitesse
ASYNCHRONE 2 sens, 2 vitesses
CONTINU

ESPACE          RETOUR          EFFACEMENT
Sélection       Validation       Sortie menu

**FIG_10**

CONFIGURATION DE L'INSTALLATION

(Choix vérins)
MONOSTABLE
BISTABLE Cmde impulsionnelle
BISTABLE point milieu bloqué
BISTABLE (autre)

ESPACE          RETOUR          EFFACEMENT
Sélection       Validation       Sortie menu

**FIG_12**

CONFIGURATION DE L'INSTALLATION

Elément de type I
- libellé type élement
- référence
- numéro de code famille
- numéro de code type
- adresse table paramètres
- nombre de paramètres
- adresse sous programme
- nombre d'instructions

**CONFIGURATION DE L'INSTALLATION**

Adresse OT:    Adresse OR:

Temps de sortie tige:

Position repos  Présence FCR:  Présence FCT:
(0= rentré,    Logique :    Logique :
1 = sorti):    Adresse :    Adresse :

**FIG_13**

**GESTION DE LA SIMULATION**

(Vérins point-milieu bloqué)
NEZ DE MANDRIN
AVANCE BATI
VERROUILLAGE BATI
MONTEE CHARIOT ELEVATEUR
AVANCE CHARIOT ELEVATEUR
TABLE ET ROULEAUX PRESSEUR
EJECTEUR

| ESPACE | RETOUR | EFFACEMENT |
|---|---|---|
| Sélection | Validation | Sortie menu |

**FIG_14**

**GESTION DE LA SIMULATION**

Adresse OT:    Adresse OR:
état réel :    état réel :
état simulé:    état simulé :

Temps de sortie tige :
Evolution tige :

Position repos  Présence FCR:  Présence FCT:
(0= rentré :    Logique :    Logique :
1= sorti) :    Adresse:    Adresse:
        état réel  :  état réel :
        état simulé:  état simulé:

**FIG_15**

**GESTION DE LA SIMULATION**

(choix du défaut à simuler)
Blocage en rentrée
Blocage en sortie
Blocage au milieu
Collage de FCR à 1
Collage de FCR à 0
Collage de FCT à 1
Collage de FCT à 0

RAZ défauts
Réinitialisation

| ESPACE | RETOUR | EFFACEMENT |
|---|---|---|
| sélection | validation | sortie menu |

**FIG.16**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 6, no. 229 (P-155)[1107], 16 novembre 1982, page 39 P 155; & JP-A-57 130 106 (TOKYO SHIBAURA DENKI K.K.) 12-08-1982 * Résumé * | 1 | G 05 B 19/04 |
| A | Idem | 2-13 | |
| A | IEEE TRANSACTIONS ON INDUSTRY APPLICATIONS, vol. IA-16, no. 5, septembre/octobre 1980, pages 716-723, IEEE, New York, US; W.P. KRAEMER; "Testing and start-up of programmable controller systems" * Page 717 * | 2-13 | |
| A | WO-A-8 000 381 (SQUARE D CO.) * Pages 2,3 * | 2-13 | |

DOMAINES TECHNIQUES
RECHERCHES (Int. Cl.4)

G 05 B
G 06 F

Le présent rapport a été établi pour toutes les revendications

| Lieu de la recherche | Date d'achèvement de la recherche | Examinateur |
|---|---|---|
| LA HAYE | 17-06-1988 | MOYLE J.F. |